# EUROPÄISCHE PATENTSCHRIFT

(11) **EP 3 687 881 B1**
(45) Veröffentlichungstag und Bekanntmachung des Hinweises auf die Patenterteilung: **03.08.2022**
(21) Anmeldenummer: 18773369.6
(22) Anmeldetag: 12.09.2018
(51) Int. Cl.: B62D 15/02, B60W 30/06, G01C 22/02, G08G 1/16

(54) **VERFAHREN ZUM DURCHFÜHREN EINES BORDSTEINPARKENS EINES KRAFTFAHRZEUGS, VORRICHTUNG UND KRAFTFAHRZEUG**
METHOD FOR PARKING A MOTOR VEHICLE KERBSIDE, APPARATUS, AND MOTOR VEHICLE
PROCÉDÉ POUR EFFECTUER UN STATIONNEMENT EN BORD DE TROTTOIR D'UN VÉHICULE AUTOMOBILE, DISPOSITIF ET VÉHICULE AUTOMOBILE

(30) Priorität: 29.09.2017 DE 102017217441
(43) Veröffentlichungstag der Anmeldung: 05.08.2020
(73) Patentinhaber: Volkswagen Aktiengesellschaft, 38440 Wolfsburg (DE)
(72) Erfinder: HÜGER, Philipp, 38471 Rühen (DE); BÜSCHENFELD, Torsten, 31311 Uetze (DE)
(86) Internationale Anmeldenummer: PCT/EP2018/074573
(87) Internationale Veröffentlichungsnummer: WO 2019/063286

(56) Entgegenhaltungen:
- DE-A1-102005 015 088
- DE-A1-102009 003 216
- DE-A1-102011 101 163

## Beschreibung

Die Erfindung betrifft ein Verfahren zum Durchführen eines Bordsteinparkens eines Kraftfahrzeugs, eine Vorrichtung zum Durchführen des Verfahrens und ein Kraftfahrzeug.

Die Position und Lage eines Kraftfahrzeugs kann während eines Fahrmanövers mittels eines odometrischen Moduls oder Odometriemoduls mitverfolgt werden. Das Prinzip odometrischer Verfahren ist es, eine aktuelle Position aus einer zurückgelegten Wegstrecke zu bestimmen. Bei Kraftfahrzeugen können dazu unter anderem die Anzahl der Radimpulse von Radsensoren und der Einschlagwinkel des Lenkrads mitverfolgt werden. Diese Art der Positionsbestimmung kommt insbesondere bei Parkassistenzsystemen wie zum Beispiel Parklenkassistenten zum Einsatz. Hierbei kann sich jedoch die Problematik ergeben, dass aufgrund einer Überquerung einer Bordsteinkante eine zusätzliche Drehung eines Rads erfolgt, durch die sich keine Änderung der Wegstrecke, sondern nur eine Höhenänderung ergibt. Dies erweist sich als problematisch, weil in Kraftfahrzeugen in der Regel 2-D-Odometrieverfahren verwendet werden. Mit anderen Worten ist eine Höhenänderung nicht berücksichtigt und die zusätzlichen Radimpulse werden somit einer Bewegung des Kraftfahrzeugs in der Ebene zugeschrieben, obwohl der zusätzliche Radlaufweg in eine Höhenrichtung verläuft. Dies führt dazu, dass es zu einer Abweichung der berechneten Position des Kraftfahrzeugs von der wirklichen Position kommen kann. Bei Parklenkassistenten kann dies letztendlich dazu führen, dass das Kraftfahrzeug am Ende eines Einparkvorgangs eine Position und/oder Lage aufweist, welche von einer Sollposition abweicht.

In der DE 10 2013 220 931 A1 sind ein Verfahren und eine Vorrichtung zum Unterstützen des Auffahrens eines Kraftfahrzeugs auf einen Bordstein beschrieben. Im Rahmen des Verfahrens wird ein sich in der Umgebung des Kraftfahrzeugs befindlicher Bordstein erfasst und wenigstens ein Betriebsparameter des Kraftfahrzeugs derart angepasst, dass eine mit dem Auffahren auf den Bordstein einhergehende Erschütterung des Kraftfahrzeugs reduziert wird.

In der DE 10 2009 046 656 A1 wird ein Verfahren zur Erkennung einer zum Einparken eines Fahrzeugs geeigneten Parklücke beschrieben. Während des Verfahrens wird überprüft, ob eine Parklücke einen Bordstein aufweist, welcher zum Erreichen einer Parkposition mit mindestens einem Rad des Fahrzeugs überwunden werden muss. In Abhängigkeit von der gewählten Ausführung des Verfahrens kann es vorgesehen sein, dass die Parklücke verworfen wird, wenn ein Überfahren eines Bordsteins zum Erreichen einer Parkposition erforderlich ist oder dieser eine Höhe aufweist, welche oberhalb einer vorgegebenen Maximalhöhe liegt.

In der DE 10 2010 001 922 A1 werden ein Verfahren und eine Vorrichtung zum Parken eines Kraftfahrzeugs beschrieben. Dabei ist es vorgesehen, die Größe eines Lenkeinschlagwinkels von mindestens einer mittels eines Sensors ermittelten Umgebungssituation des Kraftfahrzeugs einzustellen, um ein Wegrollen des Fahrzeugs zu verhindern. Dabei wird eine Fahrzeugneigung, sowie eine Lage und eine Höhe eines Bordsteins berücksichtigt.

In der DE 10 2015 118 471 A1 ist ein Verfahren zum zumindest semi-autonomen Manövrieren eines Kraftfahrzeugs mit aktivem Fahrwerkssystem beschrieben. In dem Verfahren ist es vorgesehen, dass während eines Fahrmanövers des Kraftfahrzeugs mittels Odometrie fortlaufend ein Positionswert des Kraftfahrzeugs bestimmt wird. Der Positionswert wird anhand einer erfassten Höhenänderung zumindest einer Dämpfereinrichtung, welche bei einer Bewegung eines Rades des Kraftfahrzeugs über einen Bordstein erkannt wird, korrigiert.

In der DE 10 2016 104 574 A1 ist ein Verfahren zum zumindest semi-autonomen Einparken eines Kraftfahrzeugs offenbart. In dem Verfahren wird ein Drehmoment, welches bei einem Überwinden eines Übergangs auf zumindest ein Rad übertragen wird, vor einem Beginn der Überwindung in Abhängigkeit von zumindest einem eine Parklücke und/oder das Kraftfahrzeug charakterisierenden Parameter vorherbestimmt.

In der DE 10 2016 111 079 A1 ist ein Verfahren zur Objekthöhenerkennung eines Objekts in der Umgebung eines Kraftfahrzeugs beschrieben. Dabei ist es vorgesehen, dass durch eine Kamera am Kraftfahrzeug ein erstes zweidimensionales Bild eines Objektes aus einer ersten Relativposition zwischen Kraftfahrzeug und Objekt aufgenommen wird und durch einen Vergleich des ersten zweidimensionalen Bildes mit einem zweiten zweidimensionalen Bild des Objekts aus einer zweiten Relativposition zwischen Kraftfahrzeug und Objekt eine Höhe des Objekts durch eine Steuereinrichtung ermittelt wird.

In der DE 10 2014 111 012 A1 ist ein Verfahren zum Unterstützen eines Fahrers eines Kraftfahrzeugs beim Ausparken beschrieben. In dem Verfahren wird mindestens ein Bild von einem Umgebungsbereich des Kraftfahrzeugs mittels einer Kamera des Kraftfahrzeugs bereitgestellt und zumindest ein die Parkfläche begrenzendes Begrenzungselement anhand des Bildes mittels einer Auswerteeinrichtung des Kraftfahrzeugs ermittelt.

In der DE 10 2012 014 809 A1 ist ein Verfahren zum Erkennen einer Bordsteinüberfahrt offenbart. In dem Verfahren ist es vorgesehen, die Bordsteinüberfahrt zu identifizieren, wenn ein Rad eine positive Beschleunigung für ein vorgegebenes Zeitintervall und mindestens eines der anderen Räder eine negative Beschleunigung für dasselbe Zeitintervall aufweist. Die Erkennung der Bordsteinüberfahrt wird zur Korrektur einer odometrischen Positionsbestimmung und zur Berechnung von Trajektorien eines Parklenkassistenten eingesetzt.

In der DE 10 2011 101 163 A1 ist ein Verfahren zur Positionsbestimmung eines Fahrzeugs beschrieben. In dem Verfahren ist es vorgesehen, mittels einer Einrichtung zur Erfassung eines Höhenabstandes einen Höhenabstand oder eine Änderung des Höhenabstands zumindest eines Rades von einer Fahrbahnebene zu bestimmen.

Die DE 10 2005 015 088 A1 beschreibt die Verwendung zweier unterschiedlicher Bilder, um die Höhe eines Hindernisses zu ermitteln. Dabei wird unter Verwendung eines akustischen Sonars ein Abstand zu dem Hindernis ermittelt. Die DE 10 2005 015 088 A1 befasst sich insbesondere mit einem Hindernis, welches frontal vor einem Kraftfahrzeug auftritt.

Es ist eine Aufgabe der Erfindung, eine korrekte Positionsbestimmung eines Kraftfahrzeugs beim Überfahren einer Bordsteinkante zu ermöglichen.

Erfindungsgemäß wird ein Verfahren zum Durchführen eines Bordsteinparkens eines Kraftfahrzeugs mittels einer Vorrichtung bereitgestellt. Dabei wird ein vorbestimmter Parkbereich für das Kraftfahrzeug erfasst und eine Höhe einer Bordsteinkante in dem vorbestimmten Parkbereich durch eine erste Erfassungseinrichtung der Vorrichtung erfasst. Der vorbestimmte Parkbereich kann durch eine weitere Vorrichtung des Kraftfahrzeugs vorgegeben sein oder durch die erste Erfassungseinrichtung der Vorrichtung identifiziert worden sein. Während eines Fahrmanövers in dem vorbestimmten Parkbereich wird ein Verlauf von Radimpulsen eines jeweiligen Radsensors zumindest eines Rades erfasst. Ein Überqueren der Bordsteinkante durch das zumindest eine Rad wird durch eine zweite Erfassungseinrichtung der Vorrichtung erfasst. Während des Überquerens der Bordsteinkante wird eine Korrekturmaßnahme für ein odometrisches Modul oder Odometriemodul des Kraftfahrzeugs in Abhängigkeit von der Höhe der Bordsteinkante durchgeführt. Mit anderen Worten wird während des Verfahrens durch eine erste Erfassungseinrichtung ein vorbestimmter Parkbereich auf eine Anwesenheit einer Bordsteinkante überprüft und gegebenenfalls die Höhe der Bordsteinkante erfasst. Führt das Kraftfahrzeug ein Fahrmanöver in dem vorbestimmten Parkbereich aus, wird ein Verlauf von Radimpulsen zumindest eines Rads des Kraftfahrzeugs aufgezeichnet. Sobald das zumindest eine Rad des Kraftfahrzeugs die Bordsteinkante überquert, wird dies durch eine zweite Erfassungseinrichtung erfasst. Solange das zumindest eine Rad die Bordsteinkante überquert, wird eine Korrekturmaßnahme für das Odometriemodul der Vorrichtung durchgeführt, wobei eine sich aus der Höhe der Bordsteinkante ergebene Abweichung korrigiert wird. Dadurch ergibt sich der Vorteil, dass ein Überqueren einer Bordsteinkante nicht zu einer fehlerhaften Positionsbestimmung des Kraftfahrzeugs führt. Es ist beispielsweise möglich, dass eine Höhe einer Bordsteinkante in einem Parkbereich erfasst wird. Bei einem Parkbereich kann es sich beispielsweise um einen Parkbereich handeln, welcher vorbestimmte Mindestabmessungen aufweisen kann. Die Erfassung der Höhe der Bordsteinkante kann durch eine erste Erfassungseinrichtung erfasst werden, wobei es sich beispielsweise um eine Kamera eines Außenkamerasystems eines Kraftfahrzeugs handeln kann. Die Höhe kann dabei beispielsweise mittels eines vorbestimmten Bildauswerteverfahrens bestimmt werden. Das Kraftfahrzeug kann ein Fahrmanöver durchführen, welches zumindest teilweise innerhalb des Parkbereichs erfolgt. Dabei kann beispielsweise ein Radimpuls eines Rads mittels eines Radimpulsgebers kontinuierlich erfasst werden. Sobald das Rad die Bordsteinkante überquert, kann dies durch eine zweite Erfassungseinrichtung erfasst werden. Die zweite Erfassungseinrichtung kann beispielsweise einen Neigungssensor umfassen, welcher das Überqueren der Bordsteinkante durch das zumindest eine Rad mittels einer Erfassung einer vorbestimmten Änderung der Neigung des Kraftfahrzeugs erfasst. Es kann sein, dass während des Überquerens der Bordsteinkante in Abhängigkeit von der Höhe der Bordsteinkante eine Korrekturmaßnahme durchgeführt wird, welche eine korrekte Positionsbestimmung durch ein odometrisches Modul des Kraftfahrzeugs ermöglicht.

Es ist vorgesehen, dass die Höhe der Bordsteinkante durch die erste Erfassungseinrichtung mittels photogrammetrischer Verfahren erfasst wird. Mit anderen Worten werden durch die erste Erfassungseinrichtung zumindest ein oder mehrere Bilder der Bordsteinkante aufgenommen, aus denen mittels photogrammetrischer Verfahren die Höhe der Bordsteinkante und/oder der räumliche Verlauf der Bordsteinkante in dem Parkbereich erfasst werden. Dadurch ergibt sich der Vorteil, dass auf vorhandene Kameras eines Rundum-Kamerasystems eines Kraftfahrzeugs zurückgegriffen werden kann, welche in einigen Kraftfahrzeugen bereits verbaut sind. Es ist beispielsweise möglich, dass eine Seitenkamera eines Topviewsystems (einer Vorrichtung zur Erzeugung einer künstlichen Vogelperspektive des Kraftfahrzeugs) verwendet wird, um Bilder des Parkbereichs aufzuzeichnen, und diese mittels photogrammetrischer Verfahren auszuwerten, um den Verlauf und/oder die Höhe einer Bordsteinkante zu bestimmen.

Eine Weiterbildung der Erfindung sieht vor, dass die Korrekturmaßnahme während des Überquerens der Bordsteinkante umfasst, dass der erfasste Verlauf der Radimpulse um einen durch die Höhe der Bordsteinkante verursachten Höhenanteil des Verlaufs der Radimpulse angepasst und in dem Odometriemodul zur Bestimmung einer Kraftfahrzeugposition benutzt wird. Mit anderen Worten besteht die Korrekturmaßnahme darin, dass anstatt des erfassten Verlaufs der Radimpulse ein korrigierter Verlauf der Radimpulse in dem Odometriemodul verwendet wird, um eine Kraftfahrzeugposition zu bestimmen. Der korrigierte Verlauf basiert auf dem erfassten Verlauf der Radimpulse, wobei ein durch die Höhe der Bordsteinkante verursachter Höhenanteil herausgerechnet wurde. Dadurch ergibt sich der Vorteil, dass das Odometriemodul direkt eine Kraftfahrzeugposition bestimmen kann. So ist es beispielsweise möglich, dass ein sich aus der Höhe der Bordsteinkante ergebender Anteil an Radimpulsen bei einem Überqueren der Bordsteinkante herausgefiltert oder unterdrückt wird und nur die übrig gebliebenen Radimpulse in dem Odometriemodul zu Bestimmung der Kraftfahrzeugposition benutzt werden.

Eine Weiterbildung vor, dass die Korrekturmaßnahme während des Überquerens der Bordsteinkante umfasst, dass der während des Überquerens der Bordsteinkante erfasste Verlauf der Radimpulse in dem Odometriemodul zur Bestimmung einer vorläufigen Kraftfahrzeugposition benutzt wird. Die vorläufige Kraftfahrzeugposition wird anschließend um einen durch die Höhe der Bordsteinkante verursachten Höhenanteil des Verlaufs der Radimpulse angepasst. Mit anderen Worten wird in einem ersten Schritt eine vorläufige Kraftfahrzeugposition in dem Odometriemodul bestimmt, welche auf den erfassten Radimpulsen basiert. Die vorläufige Kraftfahrzeugposition weicht von der wirklichen Kraftfahrzeugposition aufgrund der eingangs erwähnten Problematik ab. Aus diesem Grund wird die vorläufig bestimmte Kraftfahrzeugposition angepasst, wobei diese Anpassung von einem durch die Höhe der Bordsteinkante verursachten Höhenanteil des Verlaufs der Radimpulse abhängig ist. Dadurch ergibt sich der Vorteil, dass eine Abweichung aufgrund des Höhenanteils des Verlaufs der Radimpulse nachträglich korrigiert wird. So ist es möglich, dass in einem ersten Schritt, wie allgemein üblich, die vorläufige Kraftfahrzeugposition auf Grundlage des erfassten Verlaufs der Radimpulse berechnet wird. Die vorläufige Kraftfahrzeugposition kann dabei verschoben sein, weil aufgrund der zusätzlichen Radimpulse eine längere Wegstrecke angenommen wird. Die vorläufige Kraftfahrzeugposition kann somit vor einer tatsächlichen Kraftfahrzeugposition liegen. In einem zweiten Schritt kann die richtige Kraftfahrzeugposition bestimmt werden, indem der zusätzliche Radlaufweg abgezogen wird.

Eine Weiterbildung der Erfindung sieht vor, dass die Korrekturmaßnahme während des Überquerens der Bordsteinkante einen räumlichen Verlauf oder Höhenverlauf der Bordsteinkante in dem vorbestimmten Parkbereich berücksichtigt. Mit anderen Worten erfolgt die Korrektur nicht nur in Abhängigkeit von der Höhe der Bordsteinkante, sondern auch in Abhängigkeit von dem räumlichen Verlauf der Bordsteinkante. Dadurch ergibt sich der Vorteil, dass eine kontinuierliche Korrektur der Kraftfahrzeugposition durchgeführt werden kann. So ist es möglich, dass im Rahmen der Korrekturmaßnahme aus dem erfassten räumlichen Verlauf der Bordsteinkante und einer Fahrtrichtung ein Verlauf der höhenbedingten Abweichungen berechnet werden kann.

Eine Weiterbildung der Erfindung sieht vor, dass das photogrammetrische Verfahren ein Struktur-aus-Bewegung-Verfahren (Structure from motion) in einem 3-D Modus ist. Mit anderen Worten handelt es sich bei dem photogrammetrischen Verfahren um ein Verfahren, welches aus zumindest zwei Bildern eines Objekts, welche aus jeweils unterschiedlichen Positionen aufgenommen wurden, ein dreidimensionales Modell erzeugt, welches dazu geeignet ist, den räumlichen Verlauf der Bordsteinkante in dem Parkbereich und/oder die Höhe der Bordsteinkante zu bestimmen. Dadurch ergibt sich der Vorteil, dass eine dreidimensionale Erfassung des Parkbereichs mittels eines dreidimensionalen Rekonstruktionsverfahrens ermöglicht wird.

Eine Weiterbildung der Erfindung sieht vor, dass das photogrammetrische Verfahren ein Struktur-aus-Bewegung-Verfahren in einem 2D-3D-Hybridmodus ist. Mit anderen Worten handelt es sich bei dem photogrammetrischen Verfahren um ein Verfahren, in welchem zunächst in einem zweidimensionalen Bild Kanten erkannt werden. Für die erkannten Kanten wird eine Plausibilisierung durchgeführt, ob es sich um eine Bordsteinkante handeln kann. Wenn dies der Fall ist, wird mittels eines Struktur-aus-Bewegung-Verfahrens der entsprechende Parkbereich dreidimensional vermessen. Dadurch ergibt sich der Vorteil, dass nur ein Parkbereich dreidimensional erfasst wird, in welchem sich eine Bordsteinkante befindet, und somit ein erforderlicher Rechenaufwand reduziert wird.

Eine Weiterbildung der Erfindung sieht vor, dass das photogrammetrische Verfahren ein zweidimensionales Auswerteverfahren ist, wobei in einem zweidimensionalen Bild ein Verlauf und/oder eine Höhe der Bordsteinkante mittels Methoden des maschinellen Lernens bestimmt werden. Mit anderen Worten wird keine Transformation eines oder mehrerer Bilder in ein 3D Modell durchgeführt, sondern besagte Daten direkt aus Bildinformationen des zweidimensionalen Bildes bestimmt. Dadurch ergibt sich der Vorteil, dass keine rechenaufwändige Transformation in einen dreidimensionalen Raum erforderlich ist. Es ist beispielsweise möglich, dass die Höhe oder der räumliche Verlauf der Bordsteinkante mittels eines Deep-Learning-Verfahrens aus dem Bild extrahiert werden.

Eine Weiterbildung sieht vor, dass das Überqueren der Bordsteinkante durch die zweite Erfassungseinrichtung mittels einer Erfassung einer Lageänderung des Kraftfahrzeugs erfasst wird. Mit anderen Worten handelt es sich bei der zweiten Erfassungseinrichtung um eine Vorrichtung, welche dazu eingerichtet ist, eine Lageänderung des Kraftfahrzeugs zu erfassen. Dadurch ergibt sich der Vorteil, dass es möglich ist, ein Überfahren einer Bordsteinkante auf Grundlage der Höhenänderung zu erfassen. So ist es möglich, dass die zweite Erfassungseinrichtung beispielsweise vor der Durchführung eines Fahrmanövers, beispielsweise eines Einparkvorgangs, eine Längs- und/oder Querneigung des Kraftfahrzeugs erfasst und ein Überfahren der Bordsteinkante dadurch erkennt, dass sich die Längs- und/oder Querneigung des Kraftfahrzeugs um einen vorbestimmten Betrag ändert.

Eine Weiterbildung der Erfindung sieht vor, dass das das Überqueren der Bordsteinkante durch die zweite Erfassungseinrichtung mittels Ultraschallsignalen erfasst wird. Mit anderen Worten handelt es sich bei der zweiten Erfassungseinrichtung um ein Echolot, welches Ultraschallsignale aussendet und empfängt und hieraus die Position der Bordsteinkante bezüglich des Kraftfahrzeugs bestimmt. Dadurch wird erkannt, wenn die Bordsteinkante von dem zumindest einem Rad überquert wird. So kann es sein, dass die zweite Erfassungseinrichtung die Position der Bordsteinkante bezüglich des Kraftfahrzeugs während des Fahrmanövers kontinuierlich bestimmen kann und daraus erfassen kann, wenn diese durch mindestens ein Rad des Kraftfahrzeugs überquert wird.

Eine Weiterbildung der Erfindung sieht vor, dass das Fahrmanöver teilautomatisiert oder vollautomatisiert durch die Vorrichtung durchgeführt wird. Mit anderen Worten erfolgt eine Längs- und/oder Quersteuerung des Kraftfahrzeugs durch die Vorrichtung. Dadurch ergibt sich der Vorteil, dass der Fahrer des Kraftfahrzeugs bei der Durchführung des Fahrmanövers unterstützt wird. So kann es sein, dass durch die Vorrichtung ein Sollweg oder eine Sollstrecke zum Führen des Kraftfahrzeugs von einer Ausgangsposition auf eine Parkposition in dem vorbestimmten Parkbereich berechnet und das Fahrzeug entlang des berechneten Sollwegs geführt wird.

Eine Weiterbildung der Erfindung sieht vor, dass der vorbestimmte Parkbereich und/oder ein räumlicher Verlauf der Bordsteinkante mittels einer Seitenerfassungseinrichtung erfasst wird. Mit anderen Worten erfasst eine Seitenerfassungseinrichtung einen vorbestimmten Erfassungsbereich um das Kraftfahrzeug und erkennt, ob sich in diesem Erfassungsbereich ein vorbestimmter Parkbereich und/oder eine Bordsteinkante befinden.

Die Erfindung umfasst auch eine Vorrichtung zum Durchführen des erfindungsgemäßen Verfahrens. Die Vorrichtung ist dazu eingerichtet, eine Höhe einer Bordsteinkante in einem vorbestimmten Parkbereich durch eine erste Erfassungseinrichtung und einen Verlauf von Radimpulsen zumindest eines Rads während eines Fahrmanövers in dem vorbestimmten Parkbereich kontinuierlich zu erfassen. Die Vorrichtung ist dazu eingerichtet, ein Überqueren der Bordsteinkante durch das zumindest eine Rad durch eine zweite Erfassungseinrichtung zu erfassen, und den während des Überquerens der Bordsteinkante erfassten Verlauf der Radimpulse um einen durch die Höhe der Bordsteinkante verursachten Höhenanteil der Radimpulse zu bereinigen. Die Vorrichtung ist dazu eingerichtet, die Höhe durch die erste Erfassungseinrichtung mittels eines photogrammetrischen Verfahrens zu erfassen.

Die Erfindung umfasst auch ein Kraftfahrzeug, welches eine Vorrichtung zum Durchführen des erfindungsgemäßen Verfahrens umfasst.

Zu der Erfindung gehören auch Weiterbildungen der erfindungsgemäßen Vorrichtung und des erfindungsgemäßen Kraftfahrzeugs, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Verfahrens hier nicht noch einmal beschrieben.

Im Folgenden ist ein Ausführungsbeispiel der Erfindung beschrieben. Hierzu zeigt:
- Fig. 1: einen Ablauf eines erfindungsgemäßen Verfahrens;
- Fig. 2: eine erfindungsgemäße Erfassung eines Überquerens einer Bordsteinkante; und
- Fig. 3: einen Verlauf eines Einparkvorgangs im Rahmen des erfindungsgemäßen Verfahrens.
- Fig. 4: zeigt eine mögliche Korrektur des Verlaufs der Radimpulse I während des erfindungsgemäßen Verfahrens.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

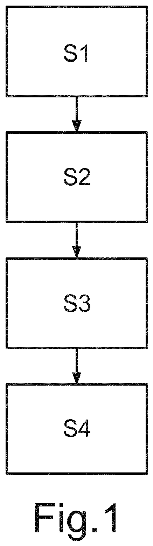

Fig. 1 zeigt einen Ablauf eines erfindungsgemäßen Verfahrens, das im Folgendem anhand von Fig. 1, Fig. 2, und Fig. 3 erläutert wird. Bei dem beschriebenen Verfahren kann es sich beispielsweise um einen Einparkvorgang eines Kraftfahrzeugs 1 in einen durch eine Seitenerfassungseinrichtung 7 der Vorrichtung 2 erkannten vorbestimmten Parkbereich 3, beispielsweise eine geeignete Parklücke, handeln. In einem ersten Schritt kann eine Höhe h einer Bordsteinkante 4, welche sich in dem vorbestimmten Parkbereich 3 befindet, durch eine erste Erfassungseinrichtung 5 der Vorrichtung 2 bestimmt werden (S1). Die erste Erfassungseinrichtung 5 kann beispielsweise eine Seitenkamera sein, welche zu einer kamerabasierten Einparkhilfe gehört. Die Kamera kann, während sich das Kraftfahrzeug 1 neben dem vorbestimmten Parkbereich 3 befindet, eine zweidimensionale Aufnahme der Parkfläche machen und mittels photogrammetrischer Verfahren einen örtlichen Verlauf und eine Höhe h der Bordsteinkante 4 in dem vorbestimmten Parkbereich 3 bestimmen (S2). Die Vorrichtung 2 kann einen Sollweg 8 bestimmen, welcher das Kraftfahrzeug 1 ausgehend von einer Ausgangsposition 9 auf eine Parkposition 10 in die Parklücke führt. Die Vorrichtung 2 kann das Kraftfahrzeug 1 vollautomatisiert entlang des Sollwegs 8 führen (S2). Während des Fahrmanövers kann ein jeweiliger Verlauf der Radimpulse I mittels Radimpulssensoren 11 eines jeweiligen Rads 12 des Kraftfahrzeugs 1 bestimmt werden. Ein Radimpulssensor 11 kann beispielsweise ein induktiver Radsensor sein. Die Verläufe der Radimpulse I der vier Räder 12 können durch ein Odometriemodul 13 der Vorrichtung 2 ausgewertet werden, um eine Kraftfahrzeugposition 15 des Kraftfahrzeugs 1 bestimmen zu können. Die Vorrichtung 2 kann einen Mikroprozessor und/oder einen Mikrocontroller umfassen. Während des Fahrmanövers kann zumindest ein Rad 12 die Bordsteinkante 4 überqueren (S3). Dadurch werden aufgrund der Höhendifferenz zusätzliche Radimpulse I durch den Radimpulssensor 11 gemessen. Das Überqueren der Bordsteinkante 4 durch das zumindest eine Rad 12 kann durch eine zweite Erfassungseinrichtung 6 erfasst werden, wobei es sich beispielsweise um Ultraschallsensoren und/oder Lagesensoren handeln kann. Solange das jeweilige Rad 12 die Bordsteinkante 4 überquert, kann eine Korrekturmaßnahme durchgeführt werden, wobei die auf die Höhendifferenz zurückzuführenden zusätzlichen Radimpulse Iz herausgefiltert (S4) werden, sodass sich ein Verlauf von gefilterten Radimpulsen Ix ergibt. Die Anzahl der herauszufilternden Radimpulse Iz kann in Abhängigkeit von der erfassten Höhe h der Bordsteinkante 4 sein. Der Verlauf der gefilterten Radimpulse Ix kann zur Bestimmung einer Bewegung in der Ebene benutzt werden. Somit wird die aktuelle Fahrzeugposition 15 nicht aufgrund der Höhendifferenz gestört. Alternativ dazu ist es möglich, dass das Odometriemodul eine vorläufige Kraftfahrzeugposition 14 aus den erfassten Radimpulsen I bestimmt und die vorläufige Kraftfahrzeugposition 14 mittels der Korrekturmaßnahme nachträglich korrigiert wird. Während der Korrekturmaßnahme kann die vorläufige Kraftfahrzeugposition 14 in Abhängigkeit der Höhe h der Bordsteinkante und/oder dem räumlichen Verlauf der Bordsteinkante 4 derart modifiziert werden, dass sie mit der Kraftfahrzeugposition 15 übereinstimmt.

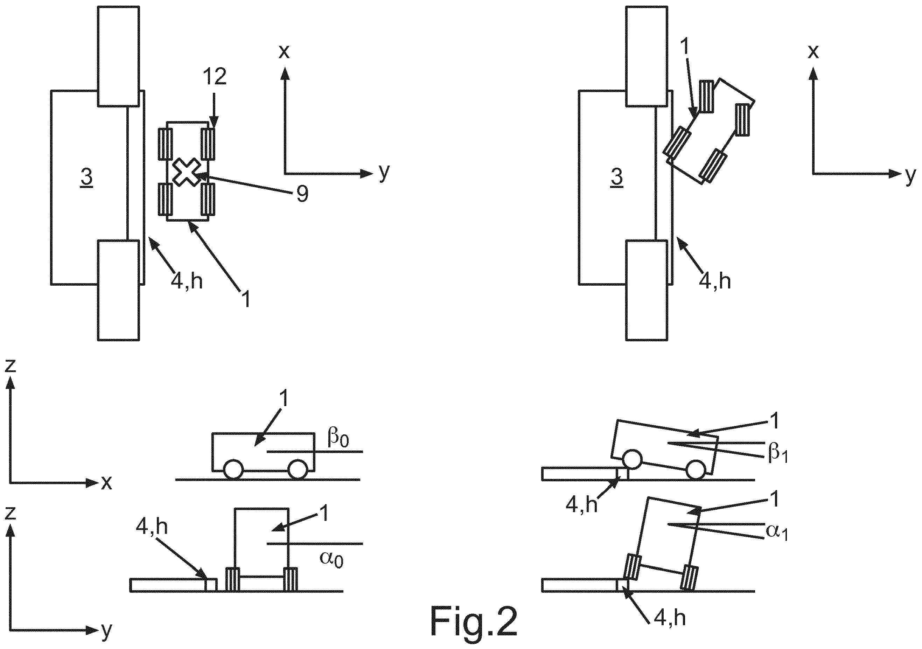

Fig. 2 zeigt eine erfindungsgemäße Erfassung eines Überquerens einer Bordsteinkante 4. Es kann sein, dass vor der Durchführung eines Fahrmanövers eine Lage des Kraftfahrzeugs 1, umfassend eine Längsneigung β0 und eine Querneigung α0 durch die zweite Erfassungseinrichtung 6 erfasst werden. Es kann sein, dass das Kraftfahrzeug 1 vor der Durchführung des Fahrmanövers eine Längsneigung β0 und eine Querneigung α0 aufweist, welche jeweils 0° betragen. Wenn ein Rad 12 des Kraftfahrzeugs 1 die Bordsteinkante 4 überquert, können sich die Längsneigung und die Querneigung des Kraftfahrzeugs 1 ändern. Zu einem Zeitpunkt während des Überquerens der Bordsteinkante 4 kann die Längsneigung einen Wert β1 und die Querneigung einen Wert α1 aufweisen. Anhand der Änderung der Neigungswerte kann die zweite Erfassungseinrichtung 6 bestimmen, wann und unter welchem Winkel die Bordsteinkante 4 überquert wird. Es kann sein, dass der Verlauf des Radimpulses I während der Überquerung der Bordsteinkante 4 in Abhängigkeit von den Änderungen der Quer- und der Längsneigung und der Bordsteinhöhe h angepasst wird, sodass nur die Radimpulse Ix in dem Odometriemodul zur Positionsbestimmung verwendet werden, welche sich aus einer Bewegung des Kraftfahrzeugs 1 in der Ebene ergeben.

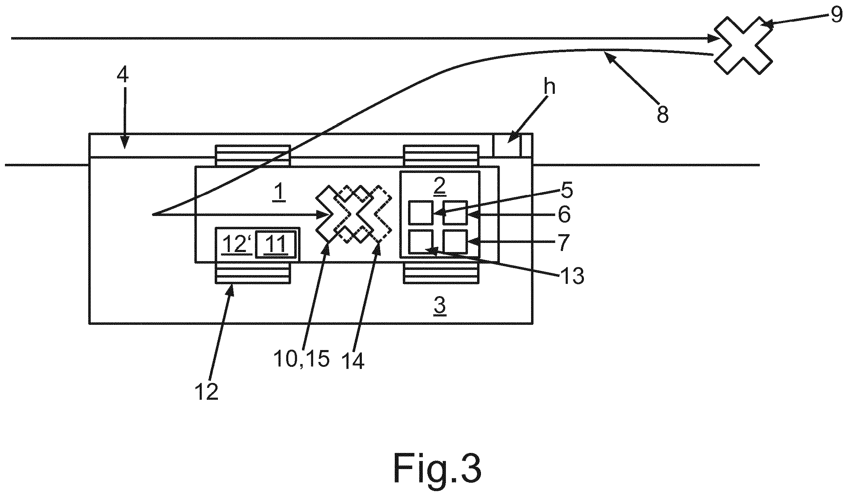

Fig. 3 zeigt einen Verlauf eines Einparkvorgangs im Rahmen des erfindungsgemäßen Verfahrens. Das Kraftfahrzeug 1 kann an geparkten Autos vorbeifahren und mittels einer Seitenerfassungseinrichtung 7, welche geparkte Fahrzeuge und/oder die Lage von Bordsteinkanten, beispielsweise mittels Ultraschallsignalen, erfassen kann, einen Parkbereich 3 erkennen. Ein Parkbereich 3 kann vorbestimmten Abmessungen genügen.

Vor dem Parkbereich 3 kann sich eine zu überquerende Bordsteinkante 4 befinden. Die erste Erfassungseinrichtung 5 kann die Höhe h der Bordsteinkante 4 und deren Verlauf mittels eines photogrammetrischen Verfahrens erfassen. Dabei kann das Verfahren ein Struktur-aus-Bewegung-Verfahren umfassen. Das Verfahren kann einen 2D-Modus, einen 3D-Modus und/oder einen zweistufigen 2D-3D-Hybridmodus umfassen. Die Vorrichtung 2 kann das Kraftfahrzeug 1 an einer Ausgangsposition 9 anhalten und einen Sollweg 8 berechnen, welcher das Kraftfahrzeug 1 auf eine Parkposition 10 in dem Parkbereich 3 führt. Das Kraftfahrzeug 1 kann vollautomatisiert entlang des Sollwegs 8 geführt werden. Dabei kann die Vorrichtung 2 eine Kraftfahrzeugposition 15 mittels einer Korrekturmaßnahme aus einer vorläufigen Kraftfahrzeugposition 14 berechnen, welche sich aus der Anzahl der erfassten Radimpulse I bestimmen lässt. Vor der Einleitung des Fahrmanövers kann das Kraftfahrzeug 1 eine Querneigung und eine Längsneigung des Kraftfahrzeugs 1 mittels einer zweiten Erfassungseinrichtung 6 erfassen. Während des Manövers kann die Bordsteinkante 4 überquert werden. In Abhängigkeit von dem Verlauf des Sollwegs 8 und der Höhe h der Bordsteinkante 4 können sich dabei die Längs- und die Querneigung des Kraftfahrzeugs 1 ändern. Dies kann durch die zweite Erfassungseinrichtung 6 erfasst werden. Dementsprechend kann die Anzahl der während einer Überquerung der Bordsteinkante 4 erfassten Radimpulse I modifiziert werden. Aus der Anzahl der erfassten Radimpulse I aller Räder 12 kann die Vorrichtung 2 die aktuelle Position und Lage des Kraftfahrzeugs 1 bestimmen. Somit kann das Kraftfahrzeug 1 auf die zu erreichende Position geführt werden.

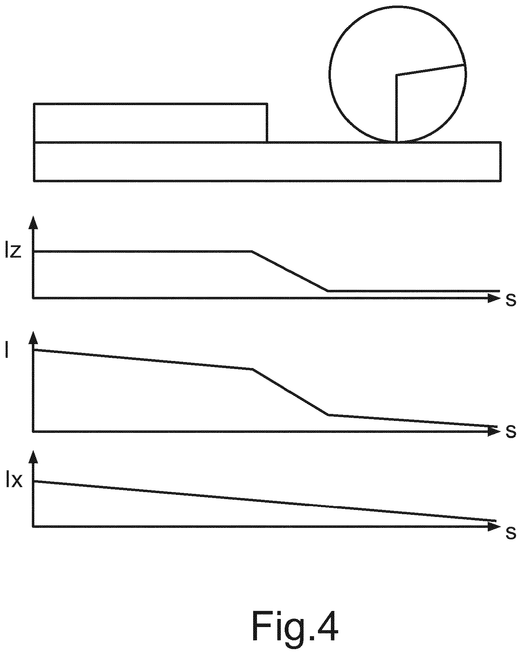

Fig. 4 zeigt eine mögliche Korrektur des Verlaufs der Radimpulse I während des erfindungsgemäßen Verfahrens. Dargestellt wird ein Rad 12, welches auf eine Bordsteinkante 4 der Höhe h zufährt. Das erste Diagramm zeigt die Zahl der erfassten Radimpulse I aufgetragen gegen die in der Ebene zurückgelegte Wegstrecke des Rads 12. Bei einer Bewegung auf einer ebenen Fläche müsste die Anzahl der erfassten Radimpulse I proportional zu der zurückgelegten Wegstrecke des Rads sein. Im Parkbereich 3 der Überquerung der Bordsteinkante 4 kommt es zu einer höheren Steigung in dem Diagramm, weil aufgrund des Höhenanteils zusätzliche Radimpulse I erfasst werden. Das zweite Diagramm zeigt den Verlauf der Differenz der Anzahl der erfassten Radimpulse I zu dem Verlauf der Anzahl der Radimpulse I, welcher sich bei einer ebenen Fläche ergeben würde. Dieser Verlauf kann beispielsweise aus einer erfassten Änderung der Quer- und der Längsneigung, sowie der erfassten Bordsteinhöhe berechnet sein. Die Vorrichtung 2 kann den Verlauf der erfassten Radimpulse I derart modifizieren, dass der durch die Bordsteinhöhe erzeugte Anteil der Radimpulse I aus dem Verlauf der erfassten Radimpulse I herausgerechnet wird und somit der Verlauf der Anzahl der übrigen Radimpulse I zu der zurückgelegten Wegstrecke in der Ebene übereinstimmt.

Insgesamt zeigt das Beispiel, wie durch die Erfindung eine korrekte Positionsbestimmung eines Kraftfahrzeugs 1 beim Überfahren einer Bordsteinkante 4 ermöglicht wird.

### Bezugszeichenliste

- 1: Kraftfahrzeug
- 2: Vorrichtung
- 3: Parkbereich
- 4: Bordsteinkante
- 5: erste Erfassungseinrichtung
- 6: zweite Erfassungseinrichtung
- 7: Seitenerfassungseinrichtung
- 8: Sollweg
- 9: Ausgangsposition
- 10: Parkposition
- 11: Radsensor
- 12: Rad
- 13: Odometriemodul
- 14: Vorläufige Kraftfahrzeugposition
- 15: Kraftfahrzeugposition
- α0: Querneigung bei Ausgangsposition
- β0: Längsneigung bei Ausgangsposition
- α0: Querneigung bei Bordsteinkantenüberquerung
- β0: Längsneigung bei Bordsteinkantenüberquerung
- h: Höhe h der Bordsteinkante

## Patentansprüche

1. Verfahren zum Durchführen eines Bordsteinparkens eines Kraftfahrzeugs (1) mittels einer Vorrichtung (2), wobei
a. in einem vorbestimmten Parkbereich (3) eine Höhe (h) einer Bordsteinkante (4) durch eine erste Erfassungseinrichtung (5) der Vorrichtung (2) erfasst wird,
b. ein Verlauf von Radimpulsen (I) eines jeweiligen Radsensors (I) zumindest eines Rads (12) während eines Fahrmanövers zum Bordsteinparken in dem vorbestimmten Parkbereich (3) erfasst wird,
c. ein Überqueren der Bordsteinkante (4) durch das zumindest eine Rad (12) durch eine zweite Erfassungseinrichtung (6) der Vorrichtung (2) erfasst wird, und
d. während des Überquerens der Bordsteinkante eine Korrekturmaßnahme für ein Odometriemodul (13) der Vorrichtung (2) in Abhängigkeit von der Höhe (h) der Bordsteinkante (4) durchgeführt wird,
**dadurch gekennzeichnet, dass**
die Höhe (h) durch die erste Erfassungseinrichtung (5) mittels eines photogrammetrischen Verfahrens erfasst wird.

2. Verfahren nach Anspruch (1), **dadurch gekennzeichnet, dass** die Korrekturmaßnahme während des Überquerens der Bordsteinkante (4) umfasst, dass der erfasste Verlauf der Radimpulse (I) um einen durch die Höhe (h) der Bordsteinkante (4) verursachten Höhenanteil des Verlaufs der Radimpulse (I) angepasst und in dem Odometriemodul (13) zur Bestimmung einer Kraftfahrzeugposition benutzt wird.

3. Verfahren nach einem der vorhergehenden Ansprüche, **dadurch gekennzeichnet, dass** die Korrekturmaßnahme während des Überquerens der Bordsteinkante (4) umfasst, dass der während des Überquerens der Bordsteinkante (4) erfasste Verlauf der Radimpulse (I) in dem Odometriemodul (13) zur Bestimmung einer vorläufigen Kraftfahrzeugposition benutzt wird, und die vorläufige Kraftfahrzeugposition um einen durch die Höhe (h) der Bordsteinkante (4) verursachten Höhenanteil des Verlaufs der Radimpulse (I) angepasst wird.

4. Verfahren nach einem der vorhergehenden Ansprüche, **dadurch gekennzeichnet, dass** die Korrekturmaßnahme während des Überquerens der Bordsteinkante (4) einen räumlichen Verlauf der Bordsteinkante (4) in dem vorbestimmten Parkbereich (3) berücksichtigt.

5. Verfahren nach einem der vorhergehenden Ansprüche, **dadurch gekennzeichnet, dass** das photogrammetrische Verfahren ein Struktur-aus-Bewegung-Verfahren in einem 3D-Modus ist.

6. Verfahren nach einem der vorhergehenden Ansprüche, **dadurch gekennzeichnet, dass** das photogrammetrische Verfahren ein Struktur-aus-Bewegung-Verfahren, in einem zweistufigen 2D-3D-Hybridmodus ist.

7. Verfahren nach einem der vorhergehenden Ansprüche, **dadurch gekennzeichnet, dass** das photogrammetrische Verfahren ein Struktur-aus-Bewegung-Verfahren in einem 2D-Modus ist, wobei die Höhe der Bordsteinkante mittels einer Methode des maschinellen Lernens erfasst wird.

8. Verfahren nach einem der vorhergehenden Ansprüche, **dadurch gekennzeichnet, dass** das Überqueren der Bordsteinkante (4) durch die zweite Erfassungseinrichtung (6) mittels einer Erfassung einer Lageänderung und/oder Neigungsänderung des Kraftfahrzeugs (1) erfasst wird.

9. Verfahren nach einem der vorhergehenden Ansprüche, **dadurch gekennzeichnet, dass** das Überqueren der Bordsteinkante (4) durch die zweite Erfassungseinrichtung (6) mittels Ultraschallsignalen erfasst wird.

10. Verfahren nach einem der vorhergehenden Ansprüche, **dadurch gekennzeichnet, dass** das Fahrmanöver teilautomatisiert oder vollautomatisiert durch die Vorrichtung (2) durchgeführt wird.

11. Verfahren nach einem der vorhergehenden Ansprüche, **dadurch gekennzeichnet, dass** der vorbestimmte Parkbereich (3) mittels einer Seitenerfassungseinrichtung (7) des Kraftfahrzeugs (1) erfasst wird.

12. Vorrichtung (2) zum Durchführen eines Bordsteinparkens eines Kraftfahrzeugs (1), wobei die Vorrichtung (2) dazu eingerichtet ist,
a. in einem vorbestimmten Parkbereich (3) eine Höhe (h) einer Bordsteinkante (4) durch eine erste Erfassungseinrichtung (5) zu erfassen,
b. einen Verlauf von Radimpulsen (I) zumindest eines Rads (12) während eines Fahrmanövers in dem vorbestimmten Parkbereich (3) zu erfassen,
c. ein Überqueren der Bordsteinkante (4) durch das zumindest eine Rad (12) durch eine zweiten Erfassungseinrichtung (6) zu erfassen, und
d. während des Überquerens der Bordsteinkante eine Korrekturmaßnahme für ein Odometriemodul des Kraftfahrzeugs (1) in Abhängigkeit von der Höhe (h) der Bordsteinkante (4) durchzuführen,
**dadurch gekennzeichnet, dass**
die Vorrichtung (2) dazu eingerichtet ist, die Höhe (h) durch die erste Erfassungseinrichtung (5) mittels eines photogrammetrischen Verfahrens zu erfassen.

13. Kraftfahrzeug (1), umfassend eine Vorrichtung (2) nach Anspruch 12 zum Durchführen eines Verfahrens nach einem der Ansprüche 1 bis 11.

## Claims

1. Method for carrying out kerbside parking of a motor vehicle (1) by means of an apparatus (2), wherein
a. a height (h) of a kerb edge (4) is detected in a predetermined parking area (3) by a first detection device (5) of the apparatus (2),
b. a profile of wheel pulses (I) of a respective wheel sensor (I) of at least one wheel (12) is detected in the predetermined parking area (3) during a driving manoeuvre for kerbside parking,
c. crossing of the kerb edge (4) by the at least one wheel (12) is detected by a second detection device (6) of the apparatus (2), and
d. during the crossing of the kerb edge, a corrective measure for an odometry module (13) of the apparatus (2) is carried out in dependence on the height (h) of the kerb edge (4),
**characterized in that** the height (h) is detected by the first detection device (5) by means of a photogrammetric method.

2. Method according to Claim 1, **characterized in that** the corrective measure during the crossing of the kerb edge (4) comprises that the detected profile of the wheel pulses (I) is adapted by a height component of the profile of the wheel pulses (I) that is caused by the height (h) of the kerb edge (4) and is used in the odometry module (13) for determining a position of the motor vehicle.

3. Method according to one of the preceding claims, **characterized in that** the corrective measure during the crossing of the kerb edge (4) comprises that the profile of the wheel pulses (I) detected during the crossing of the kerb edge (4) is used in the odometry module (13) for determining a preliminary position of the motor vehicle, and the preliminary position of the motor vehicle is adapted by a height component of the profile of the wheel pulses (I) that is caused by the height (h) of the kerb edge (4).

4. Method according to one of the preceding claims, **characterized in that** the corrective measure during the crossing of the kerb edge (4) takes into account a spatial profile of the kerb edge (4) in the predetermined parking area (3).

5. Method according to one of the preceding claims, **characterized in that** the photogrammetric method is a structure-from-motion method in a 3D mode.

6. Method according to one of the preceding claims, **characterized in that** the photogrammetric method is a structure-from-motion method in a two-stage 2D-3D hybrid mode.

7. Method according to one of the preceding claims, **characterized in that** the photogrammetric method is a structure-from-motion method in a 2D mode, wherein the height of the kerb edge is detected by means of a method of machine learning.

8. Method according to one of the preceding claims, **characterized in that** the crossing of the kerb edge (4) is detected by the second detection device (6) by means of a detection of a change in position and/or change in inclination of the motor vehicle (1).

9. Method according to one of the preceding claims, **characterized in that** the crossing of the kerb edge (4) is detected by the second detection device (6) by means of ultrasonic signals.

10. Method according to one of the preceding claims, **characterized in that** the driving manoeuvre is carried out by the apparatus (2) in a partially automated or fully automated manner.

11. Method according to one of the preceding claims, **characterized in that** the predetermined parking area (3) is detected by means of a side detection device (7) of the motor vehicle (1).

12. Apparatus (2) for carrying out kerbside parking of a motor vehicle (1), wherein the apparatus (2) is set up
a. to detect a height (h) of a kerb edge (4) in a predetermined parking area (3) by a first detection device (5),
b. to detect a profile of wheel pulses (I) of at least one wheel (12) in the predetermined parking area (3) during a driving manoeuvre,
c. to detect crossing of the kerb edge (4) by the at least one wheel (12) by a second detection device (6), and
d. during the crossing of the kerb edge, to carry out a correction measure for an odometry module of the motor vehicle (1) in dependence on the height (h) of the kerb edge (4),
**characterized in that** the apparatus (2) is set up to detect the height (h) by the first detection device (5) by means of a photogrammetric method.

13. Motor vehicle (1), comprising an apparatus (2) according to Claim 12 for carrying out a method according to one of Claims 1 to 11.

## Revendications

1. Procédé de stationnement en bordure de trottoir d'un véhicule automobile (1) au moyen d'un dispositif (2),
a. dans une zone de stationnement prédéterminée (3), une hauteur (h) d'une bordure de trottoir (4) étant détectée par un premier organe de détection (5) du dispositif (2),
b. un profil d'impulsions de roue (I) d'un capteur de roue respectif (I) d'au moins une roue (12) étant détecté pendant une manœuvre de conduite en vue du stationnement en bordure de trottoir dans la zone de stationnement prédéterminée (3),
c. le franchissement de la bordure de trottoir (4) par l'au moins une roue (12) étant détecté par un deuxième organe de détection (6) du dispositif (2), et
d. lors du franchissement de la bordure de trottoir, une mesure de correction d'un module d'odométrie (13) du dispositif (2) étant effectuée en fonction de la hauteur (h) de la bordure de trottoir (4),
**caractérisé en ce que**
la hauteur (h) est détectée par le premier organe de détection (5) à l'aide d'un procédé photogrammétrique.

2. Procédé selon la revendication (1), **caractérisé en ce que** la mesure de correction lors du franchissement de la bordure de trottoir (4) comprend l'adaptation du profil détecté des impulsions de roue (I) d'une portion de hauteur du profil des impulsions de roue (I) qui est due à la hauteur (h) de la bordure de trottoir (4) et l'utilisation de ladite adaptation dans le module d'odométrie (13) pour déterminer la position du véhicule automobile.

3. Procédé selon l'une des revendications précédentes, **caractérisé en ce que** la mesure de correction lors du franchissement de la bordure de trottoir (4) comprend l'utilisation du profil des impulsions de roue (I), qui est détecté lors du franchissement de la bordure de trottoir (4), dans le module d'odométrie (13) pour déterminer la position provisoire du véhicule automobile, et l'adaptation de la position provisoire du véhicule automobile d'une proportion de hauteur du profil des impulsions de roue (I) qui est due à la hauteur (h) de la bordure de trottoir (4).

4. Procédé selon l'une des revendications précédentes, **caractérisé en ce que** la mesure de correction lors du franchissement de la bordure de trottoir (4) prend en compte un profil spatial de la bordure de trottoir (4) dans la zone de stationnement prédéterminée (3).

5. Procédé selon l'une des revendications précédentes, **caractérisé en ce que** le procédé photogrammétrique est un procédé structure acquise à partir d'un-mouvement' en mode 3D.

6. Procédé selon l'une des revendications précédentes, **caractérisé en ce que** le procédé photogrammétrique est un procédé structure acquise à partir d'un-mouvement' dans un mode hybride 2D-3D en deux étapes.

7. Procédé selon l'une des revendications précédentes, **caractérisé en ce que** le procédé photogrammétrique est un procédé structure acquise à partir d'un-mouvement' en mode 2D, la hauteur de la bordure de trottoir étant détectée à l'aide d'une méthode d'apprentissage automatique.

8. Procédé selon l'une des revendications précédentes, **caractérisé en ce que** le franchissement de la bordure de trottoir (4) est détecté par le deuxième organe de détection (6) par détection d'un changement de position et/ou d'un changement d'inclinaison du véhicule automobile (1).

9. Procédé selon l'une des revendications précédentes, **caractérisé en ce que** le franchissement de la bordure de trottoir (4) est détecté par le deuxième organe de détection (6) à l'aide de signaux ultrasonores.

10. Procédé selon l'une des revendications précédentes, **caractérisé en ce que** la manœuvre de conduite est effectuée de manière partiellement ou entièrement automatique par le dispositif (2).

11. Procédé selon l'une des revendications précédentes, **caractérisé en ce que** la zone de stationnement prédéterminée (3) est détectée à l'aide d'un organe de détection latérale (7) du véhicule automobile (1).

12. Dispositif (2) de stationnement en bordure de trottoir d'un véhicule automobile (1), le dispositif (2) étant conçu pour
a. détecter une hauteur (h) d'une bordure de trottoir (4) dans une zone de stationnement prédéterminée (3) par le biais d'un premier organe de détection (5),
b. détecter un profil d'impulsions de roue (I) d'au moins une roue (12) pendant une manœuvre de conduite dans la zone de stationnement prédéterminée (3),
c. détecter le franchissement de la bordure de trottoir (4) par l'au moins une roue (12) par le biais d'un deuxième organe de détection (6), et
d. effectuer, lors du franchissement de la bordure de trottoir, une mesure de correction d'un module d'odométrie du véhicule automobile (1) en fonction de la hauteur (h) de la bordure de trottoir (4),
**caractérisé en ce que**
le dispositif (2) est conçu pour détecter la hauteur (h) par le biais du premier organe de détection (5) à l'aide d'un procédé photogrammétrique.

13. Véhicule automobile (1) comprenant un dispositif (2) selon la revendication 12 destiné à mettre en œuvre un procédé selon l'une des revendications 1 à 11.
